(19) **Europäisches Patentamt European Patent Office Office européen des brevets**

(11) **EP 1 546 689 B1**

(12) **FASCICULE DE BREVET EUROPEEN**

(45) Date de publication et mention
de la délivrance du brevet:
**23.11.2011   Bulletin 2011/47**

(51) Int Cl.:
**G01N 21/78** $^{(2006.01)}$         **G01N 33/18** $^{(2006.01)}$
**G01N 31/22** $^{(2006.01)}$

(21) Numéro de dépôt: **03776956.9**

(22) Date de dépôt: **03.10.2003**

(86) Numéro de dépôt international:
**PCT/FR2003/002917**

(87) Numéro de publication internationale:
**WO 2004/031751 (15.04.2004 Gazette 2004/16)**

(54) **PROCEDE POUR ETALONNER LE ZERO D'UN APPAREIL DETERMINANT LA QUANTITE DE SILICE SELON UNE METHODE COLORIMETRIQUE**

VERFAHREN ZUR NULL-EICHUNG EINER SILIZIUMMENGE BESTIMMENDEN KOLORIMETRISCHEN VORRICHTUNG

METHOD OF CALIBRATING THE ZERO POINT OF AN APPARATUS USED TO DETERMINE A QUANTITY OF SILICA USING A COLORIMETRIC METHOD

(84) Etats contractants désignés:
**CH DE FR GB LI**

(30) Priorité:  **04.10.2002  FR 0212305**

(43) Date de publication de la demande:
**29.06.2005   Bulletin 2005/26**

(73) Titulaire: **Hach SAS**
**93160 Noisy-le-Grand (FR)**

(72) Inventeurs:
 • **MATSCHENKO, Alec**
  **F-88400 Xonrupt-Longemer (FR)**
 • **LEMAITRE, Fabien**
  **F-93330 Neuilly sur Marne (FR)**

 • **QARBI, Rachid**
  **F-14280 Autie (FR)**

(74) Mandataire: **Hammond, William**
  **Cabinet Hammond**
  **33 Rue Vaneau**
  **75007 Paris (FR)**

(56) Documents cités:
 **GB-A- 793 792     US-A- 3 015 544**
 **US-A- 3 030 192**

 • **PATENT ABSTRACTS OF JAPAN vol. 016, no. 355 (P-1394), 30 July 1992 (1992-07-30) & JP 04 109166 A (JAPAN ORGANO CO LTD;OTHERS: 01), 10 April 1992 (1992-04-10)**

**Description**

La présente invention concerne un procédé pour étalonner le zéro d'un appareil qui détermine la quantité de silice selon une méthode colorimétrique.

Il sera rappelé que la mesure de la silice dissoute en faible concentration est une mesure d'une extrême importance tout particulièrement dans le domaine de la production électrique et de l'industrie des semi-conducteurs.

En effet, la silice présente dans l'eau peut précipiter lors de la détente de la vapeur d'eau sur la turbine d'une centrale électrique ou dans certaines phases du traitement des disques ou "Wafers" lors de la fabrication des semi-conducteurs.

D'autre part, la présence de silice dans les eaux déminéralisées peut aussi servir comme indicateur de fin de fonctionnement des résines de désionisation. Cette présence de silice précède invariablement le relargage des ions monovalents tels que notamment les ions sodium, chlorure.

La mesure de cette quantité de silice en solution est réalisée par une méthode colorimétrique : pour cela on crée un complexe spécifique à la silice que l'on veut mesurer et qui développe une couleur qui lui est propre

Une lumière émise dans une telle solution est absorbée par le complexe créé proportionnellement à sa concentration suivant la loi de Beer-Lambert :

$$I = I_0 \exp(-kLC) \qquad (1)$$

Dans laquelle :

- 1 est la mesure de la quantité de lumière reçue au travers de la solution ;
- $I_0$ est la quantité de lumière émise dans la solution ;
- L est la longueur du chemin optique traversée par la lumière ;
- C est la concentration du complexe créé ;
- K est une constante liée au dispositif de mesure et au coefficient d'extinction moléculaire de la solution analysée.

La loi de Beer-Lambert exprime une corrélation entre la concentration et une mesure d'absorption d'une quantité de lumière. En d'autres termes, elle exprime le fait que la concentration est reliée à une mesure d'absorption de quantité de lumière par une loi linéaire.

$$C = C_0 + K.\log(I_0 / I) \qquad (2)$$

Dans laquelle:

- $C_0$ est appelé zéro de la mesure ;
- K est la pente de la mesure ;
- $I_0$ est la mesure d'intensité de la lumière émise ;
- I est la mesure de l'intensité de lumière reçue à travers de la solution.

De la relation (2) ci-dessus, on s'aperçoit que pour déterminer les coefficients de l'équation linéaire reliant la concentration à la mesure optique d'absorption de lumière, deux méthodes sont possibles :

- déterminer l'absorption de lumière d'une solution sans silice contenant les réactifs nécessaires à la mesure, afin de déterminer le zéro, puis l'absorption de lumière par une solution de silice fortement concentrée dans la gamme de mesure de l'appareil afin de déterminer la pente.
- déterminer l'absorption de lumière de deux solutions de concentration connue de silice.

L'une et l'autre de ces méthodes nécessitent de connaître la concentration initiale en silice de l'eau servant à préparer les solutions d'étalonnage en vue du calcul des coefficients zéro et pente. Or cette concentration est inconnue. Mais, les deux équations linéaires (3) et (4) ci-après devraient permettre d'étalonner la mesure de silice :

$$C_1 + X = C_0 + K.\log(I_0 / I_1) \qquad (3)$$

$$C_2 + X = C_0 + K.\log (I_0 / I_2) \qquad (4)$$

Dans lesquelles :

-   $I_0$ est la mesure de la quantité de lumière fonction de la solution présente dans la cellule ;
-   $I_1$ est la concentration connue de la solution d'étalonnage 1 ;
-   $I_2$ est la concentration connue de la solution d'étalonnage 2 ;
-   X est la concentration inconnue de l'eau de préparation des solutions 1 et 2 faiblement concentrée en silice.

Ces deux équations linéaires (3) et (4) comportent trois inconnues $C_0$, K et X et ne peuvent donc pas être résolues.

Il n'est donc pas possible de connaître facilement les pente et zéro réels de la mesure à partir de la préparation simple de solutions préparées, comme ci-dessus exposé.

De plus, les autres méthodes simples connues de mesure de solution faiblement concentrée de silice ne fournissent pas de mesure absolue de la concentration de silice et possèdent toutes ce même inconvénient.

Parmi les méthodes utilisées pour réaliser un étalonnage de la mesure de silice, on citera plus particulièrement les deux suivantes.

Selon la première, le résiduel de silice dans l'eau de dilution peut être mesurée par spectrométrie de masse (ICP-MS : Inductively Coupled Plasma-Mass Spectrometry) : cette méthode est difficile à mettre en place et ne semble pas économiquement utilisable en mesure industrielle en ligne.

Selon une seconde méthode, on détermine la pente par la mesure d'une solution de forte concentration pour laquelle l'erreur sur la préparation de cette solution et l'erreur sur le zéro de la mesure seront négligeables devant sa concentration. Pour cela, on réalise deux solutions d'étalonnage dont la solution la plus concentrée est obtenue par pré-concentration de la première solution d'un facteur N d'au moins 20, en chauffant et évaporant celle-ci par micro-ondes contrôlées. De cette manière les deux solutions ont pour concentration X et N.X où N est le facteur de pré-concentration qui est dans le rapport des volumes avant et après évaporation. On obtient ainsi les équations linéaires (5) et (6) :

$$X = C_0 + K.\log ( I_0 / I_1) \qquad (5)$$

$$N.X = C_0 + K.\log (I_0 / I_2) \qquad (6)$$

dans lesquelles les paramètres ont les mêmes valeurs que dans les relations (3) et (4).

[0016]    - Cette méthode permet de résoudre les équations linéaires (5) et (6) et d'en déduire le zéro de l'appareil, étant entendu que K est connu. Mais elle a l'inconvénient d'avoir un temps de réponse extrêmement long (le processus de pré-concentration doit être lent et contrôlé) et n'est également pas applicable en milieu industriel et en contrôle de processus.

Aussi un des buts de la présente invention est-il de fournir un procédé pour étalonner le zéro d'un appareil qui détermine la quantité de silice selon une méthode colorimétrique, permettant de réaliser cet étalonnage dans un délai acceptable.

Un autre but de l'invention est de fournir un tel procédé qui est de mise en 5 oeuvre simple.

Ces buts ainsi que d'autres qui apparaîtront par la suite, sont atteints par le procédé de la revendication 1.

Dans un appareil pour analyser la silice contenue dans une solution, l'échantillon à analyser circule dans une boucle rapide permettant un renouvellement rapide de l'échantillon. Le réglage du débit est fait à l'aide d'une vanne à pointeau. Au début de l'analyse, l'échantillon est introduit dans la cellule de mesure à l'aide de l'électrovanne. Puis on ajoute une solution de molybdate qui réagit avec la silice contenu dans l'échantillon: on obtient ainsi un complexe silicomolybdique. Le temps de réaction est relativement long (de l'ordre de 300 s).

Un révélateur, tel que de l'acide oxalique, est ensuite ajouté pour éviter les interférences de phosphates et pour développer et intensifier la couleur du complexe silicomolybdique.

Ce complexe silicomolybdique est enfin réduit en un complexe molybdène bleu par l'intermédiaire d'ions ferreux.

Une mesure photométrique d'absorption de lumière est réalisée à la fin de la réaction.

La silice dissoute en solution existe sous forme d'acide salicylique ou de différentes sortes de silicates. Ainsi, le molybdate acide réagit avec la silice en solution pour former un complexe silicomolybdique de couleur jaune qui peut être détecté par mesure d'absorption de lumière pour détecter une concentration de quelques mg/l [ppm : partie par million]. Après réduction, le composé jaune se transforme dans un complexe de couleur bleue qui permet une détection plus sensible de la concentration de silice au niveau des $\mu$g/l [ppb : partie par billion].

Pour étalonner le zéro d'un tel appareil mettant en oeuvre la méthode d'analyse ci-dessus, on introduit dans un échantillon de solution à analyser l'acide oxalique (révélateur), puis la solution de molybdate et enfin le réducteur.

Ainsi le procédé selon la présente invention permet :

- de compenser l'absorption de lumière due à la coloration et à la turbidité éventuelle des réactifs,
- de compenser l'absorption de lumière due au complexe silicomolybdique bleu formé à partir de la silice contenue dans la solution de molybdate,
- d'éviter que la silice contenue dans l'eau au moment de la préparation servant à l'étalonnage du zéro ne réagisse et ne forme le complexe silicomolybdique bleu.

Les essais effectués montrent que la mesure d'absorption de lumière I est inchangée à 1/1000 prés pour des solutions comprenant entre 0,5 $\mu$g/l et 200 $\mu$g/l de Silice dissoute. Ils démontrent que la réaction conduisant au composé silicomolybdique ne peut pas se produire.

Cette mesure de référence, qui permet de calculer le zéro de l'appareil et qui ne dépend pas de la concentration de la solution en silice dissoute sur laquelle elle est effectuée, a été ensuite mise en relation avec la méthode de pré-concentration décrite précédemment : les mesures obtenues par les deux méthodes sont identiques.

L'exemple de détermination du zéro ci-après a pour but de permettre à l'homme du métier de mieux comprendre la mise en oeuvre du procédé selon la présente invention.

EXEMPLE

Un échantillon présent dans un réservoir à débordement est introduit dans une cellule de mesure dont le volume est d'environ 8,5 ml. Puis on ajoute 250 $\mu$l d'une solution de 40 g d'acide oxalique 2H2O.

Le mélange ainsi obtenu est maintenu en permanence sous agitation afin de le rendre homogène le plus rapidement possible ; la cellule de mesure, qui est réalisée en un matériau conducteur de la chaleur, est maintenue à une température constante de 25°C.

On réalise, environ deux minutes après l'introduction de l'acide oxalique, une première mesure d'absorption de la lumière dans cette cellule : cette mesure, $I_0$, est la mesure d'intensité de la lumière émise dans la formule de Beer-Lambert rappelée ci-dessus.

Puis on introduit ensuite 250 $\mu$l d'une solution de molybdate, dont la composition pour 1 litre est :

| | |
|---|---|
| - Molybdate de sodium, 4H2O | 35 g |
| - Hydrogénosulfate de sodium, 1H2O | 80 g |
| - Hydrogénosulfate de sodium, anhydre | 70 g |
| - Acide sulfurique concentré | 25 g |

Puis une minute après, on ajoute un réducteur, dont la composition est pour un litre :

| | |
|---|---|
| - Acide sulfurique concentré | 12,5 g |
| - Sel de Mohr (ferro-sulfate d'ammonium, 6H2O) | 20 g |

Une seconde mesure d'absorption de lumière I est effectuée une minute après l'ajout du réducteur.

Par application de la formule de Beer-Lambert, qui exprime une proportionnalité entre la concentration en silice dans l'échantillon et une mesure d'absorption d'une quantité de lumière, on détermine le zéro de l'appareil de mesure.

L'étalonnage du zéro peut être effectué selon le même procédé mais avec d'autres réactifs utilisés pour mesurer la silice par colorimétrie. Ainsi dans la méthode colorimétrique mettant en oeuvre un molybdate, un mélange de citrates puis un réducteur tel l'acide amino-naphtol sulfonique, la détermination du zéro selon la présente invention sera réalisée en introduisant dans l'échantillon le mélange de citrates, le molybdate puis le réducteur.

**Revendications**

1. Procédé pour étalonner le zéro d'un appareil qui détermine la quantité de silice contenue dans un échantillon de solution de silice à analyser par une méthode colorimétrique consistant à introduire dans ledit échantillon, successivement, une solution de molybdate, un révélateur et un réducteur, **caractérisé par le fait qu'**une mesure d'absorption de lumière est effectuée dans un échantillon de ladite solution de silice à analyser dans lequel, on introduit ledit révélateur, puis ladite solution de molybdate et enfin ledit réducteur, le zéro de l'appareil étant déterminé, par application de la formule de Beer-hambert.

2. Procédé selon la revendication 1, **caractérisé par le fait que** le révélateur est une solution d'acide oxalique et le réducteur est un mélange d'acide sulfurique concentré et de sel de Mohr.

3. Procédé selon la revendication 1, **caractérisé par le fait que** le révélateur est un mélange de citrates et le réducteur est de l'acide amino-naphtol sulfonique.

**Claims**

1. A method of calibrating the zero point of an apparatus which determines the amount of silica contained in a silica solution sample to be analysed using a colorimetric method comprising successively introducing into said sample a molybdate solution, a developer and a reducing agent, **characterised in that** a light absorption measurement is taken in a sample of said silica solution to be analysed, into which said developer is introduced, then said molybdate solution and finally said reducing agent, the zero point of the apparatus being determined by application of the Beer-Lambert formula.

2. A method according to claim 1, **characterised in that** the developer is a solution of oxalic acid and the reducing agent is a mixture of concentrated sulphuric acid and Mohr's salt.

3. A method according to claim 1, **characterised in that** the developer is a mixture of citrates and the reducing agent is amino-naphthol sulphonic acid.

**Patentansprüche**

1. Verfahren zur Eichung der Nullstellung einer Vorrichtung, welche die Menge an Silizium bestimmt, welche in einer Probe aus durch eine farbmetrische Methode zu analysierender Siliziumlösung enthalten ist, wobei das Verfahren darin besteht, dass in die Probe nacheinander eine Molybdat-Lösung, ein Entwicklermittel und ein Reduktionsmittel eingeführt werden, **dadurch gekennzeichnet, dass** eine Messung der Lichtabsorption in einer Probe der zu analysierenden Siliziumlösung ausgeführt wird, wobei das Entwicklermittel, dann die Molybdat-Lösung und schließlich das Reduktionsmittel eingeführt werden, wobei die Nullstellung der Vorrichtung durch Anwendung der Beer-Lambert-Formel bestimmt wird.

2. Verfahren nach Anspruch 1, **dadurch gekennzeichnet, dass** das Entwicklermittel eine Lösung aus Kleesäure und das Reduktionsmittel eine Mischung aus konzentrierter Schwefelsäure und Mohr-Salz ist.

3. Verfahren nach Anspruch 1, **dadurch gekennzeichnet, dass** das Entwicklermittel eine Mischung aus Citraten und das Reduktionsmittel eine Amino-Naphtol-Sulfonsäure ist.